# EUROPEAN PATENT APPLICATION

(11) **EP 2 662 459 A2**
(43) Date of publication of application: **13.11.2013**
(21) Application number: 13167230.5
(22) Date of filing: 10.05.2013
(51) Int. Cl.: C21C 5/38, C21C 5/52, F27B 3/26, F28F 9/18, F28F 1/00, F28F 1/02

(54) **Integrated gas cooling system for electric arc furnace**

(30) Priority: 10.05.2012 US 201261645260 P; 22.03.2013 US 201313849001
(71) Applicant: Alstom Technology Ltd, 5400 Baden (CH)
(72) Inventor: Ose, Sivert, 0176 Oslo (NO); Antonini, Roberto, 30350-180 Belo Horizonte (MG) (BR)

(57) **Abstract**

A flue gas cooler 11 for cooling raw, hot flue gas from an electric arc furnace of an iron and steel production plant is provided. Each flue gas cooler 11 has a gas inlet chamber 14, a gas outlet chamber 16, and a matrix of gas cooling tubes 18 extending between and into the inlet chamber and the outlet chamber. Each gas cooling tube 18 has a bell-shaped inlet end 19 comprising an aerodynamically curved gas-accelerating profile effective to facilitate streamlined flow of flue gas into the gas cooling tube. The flue gas cooler makes it possible to receive flue gas directly from an electric arc furnace without getting clogged by dust and sublimates present in the flue gas.

## Description

### Cross-Reference to Related Application

This application claims the benefit of U.S. Provisional Patent Application Serial No. 61/645,260; filed on May 10, 2012, which is incorporated herein by reference in its entirety.

### Field of the Invention

The present invention relates to an integrated gas cooler capable of recovering heat while cooling flue gas from an electric arc furnace (EAF) for metallurgical processing, particularly steel production. It further relates to an improved flue gas cooling and cleaning arrangement for an EAF steel making and refining plant, and an energy recovery system capable of extracting heat and generating energy from such flue gas for commercial purposes.

### Background of the Invention

Iron and steel production generates large amounts of hot flue gas containing carbon dioxide, carbon monoxide, hydrogen fluoride, hydrogen chloride, other gases, dioxins, particulates, and sublimates as pollutants. This hot flue gas must be cleaned to remove such pollutants prior to flue gas release to the environment. A well-known type of gas cleaning process used to clean hot flue gas is commonly referred to as a "dry scrubbing" process. Dry scrubbing systems useful for cleaning hot flue gases using a dry scrubbing process are available, for example, from ALSTOM Power Environment Control Systems (Oslo, Norway). Additional flue gas cleaning processes, such as for example particulate removal processes, may be used in combination with such a dry scrubbing process to clean flue gases.

Today, steel is made by melting and refining iron and steel scrap in a metallurgical furnace, such as an electric arc furnace (EAF) or a basic oxygen furnace (BOF). Historically, the EAF was generally designed and manufactured as a welded steel structure protected against high temperatures by a refractory lining. In the late '70s and '80s, the steel industry began to combat operational equipment stresses by replacing expensive refractory brick with water cooled roof panels and water cooled sidewall panels located in portions of the furnace vessel above the smelting area. Such water-cooled components have also been used to line furnace ducts in off-gas systems. An example of a cooling system with water-cooled coil components is disclosed in U.S. Patent Number 4,207,060. Generally, the coils are formed from adjacent pipe sections with a curved end cap, which forms a path for a liquid coolant to flow through the coils. This liquid coolant is forced through the pipes under pressure to maximize heat transfer. Current art uses carbon steel and stainless steal to form plates and pipes in such systems.

As previously noted, today's modern EAF furnaces require pollution control to capture hot flue gases created during the process of making steel. Fumes from the EAF are generally captured in two ways during the operation of the furnace. One way of flue gas capture is through the use of a furnace hood. The furnace hood is part of the plant building and catches the flue gases produced during charging and tapping. The furnace hood also catches fugitive emissions that may occur during the melting process. Typically, the furnace hood is fluidly connected to a fabric filter bag house through a non-water cooled duct. The fabric filter bag house comprises filter bags through which flue gases pass to trap and separate particulate matter from the flue gas.

A second way or form of flue gas capture is through the primary furnace line. During the melting cycle of the furnace, a damper closes the duct to the hood and opens a duct in the primary line. The primary line is a direct connection to the furnace and is the main method of capturing emissions from the furnace. The primary line is constructed of water-cooled ducts as temperatures can reach an average maximum temperature of 1250 °C, with temperature peaks of approximately 1800°C. Through and from the primary line, flue gases are evacuated from the furnace to a gas cleaning system so that the flue gases may be cleaned for release to the atmosphere.

While current water-cooled components and/or ducts are effective in cooling hot flue gases generated in EAFs, the heat from the flue gases is either lost or not easily captured for other purposes. It is therefore understood that a need exists for heat capture from EAFs for energy recovery and use for other purposes, such as electricity generation.

### Summary of the Invention

According to the present invention, a gas cooler for particulate and pollutant laden flue gas from an electric arc furnace (EAF) steel making plant comprises a gas inlet chamber, a gas outlet chamber, and a plurality of gas cooling tubes. Each such gas cooling tube has an inlet end positioned in the inlet chamber and an outlet end positioned in the outlet chamber. Likewise, each gas cooling tube has a bell-shaped inlet end comprising an aerodynamically curved gas-accelerating profile effective to facilitate streamlined flow of flue gas into the gas cooling tube.

The bell-shaped inlets of the gas cooling tubes are designed to smoothly accelerate the flow of flue gas into the gas cooling tubes, thereby substantially preventing particulate build-up inside the gas cooling tubes. As such, the above-mentioned bell-shaped, aerodynamically curved acceleration zone at the inlet of each gas cooling tube encourages streamlined flow acceleration of the flue gas and prevents flow contraction (the *vena contracta* effect). In the absence of such preventative measures, turbulent flue gas flow would cause impact of the flue gas with the internal surfaces of the gas cooling tubes, leading to particulate build-up and/or corrosion within the gas cooling tubes. The accelerated flue gas velocity in the gas cooling tubes of the preferred embodiment of the invention should be in the range of roughly 20 to 30 meters/second (m/s), depending on flue gas temperature.

In the preferred embodiment, the gas cooling tubes form a matrix of mutually parallel, spaced-apart tubes. The gas cooling tubes should be evenly spaced apart over the flue gas entry and exit areas of the inlet and outlet plenum chambers, respectively. The inlet and outlet ends of the gas cooling tubes should be dimensioned and arranged so as to project into the inlet and outlet plenum chambers.

The subject gas cooler likewise includes a coolant enclosure or jacket surrounding the gas cooling tubes. This coolant enclosure is provided with coolant entry and exit means. Conveniently, the coolant enclosure forms part of an external shell or housing of the gas cooler. Preferably, the coolant circulated in the interior of the coolant enclosure is water or other appropriate liquid. To maximise heat exchange efficiency, the direction of coolant flow through the interior of the coolant enclosure over the outside surfaces of the gas cooling tubes should be counter to the direction of flue gas flow through the inside of the gas cooling tubes.

In operation, the inlet plenum chamber of the gas cooler is fluidly connected to inlet flue ducting that transports the hot flue gas from the electric arc furnace to the gas cooler. The outlet plenum chamber is connected to outlet flue ducting that transports the cooled flue gas away from the gas cooler.

The inlet plenum chamber of the gas cooler receives the hot flue gas via a diffusing divergent inlet portion, which slows the flue gas flow to a relatively low velocity so that the flue gas is stabilised and flows evenly into the array of bell-shaped inlets of the gas cooling tubes. The flue gas flow area of the inlet plenum chamber and the arrangement of cooling tubes therein are judiciously chosen so that the diffusing divergent inlet portion of the inlet plenum chamber slows the flow of hot flue gas to a relatively low velocity, without creating zones of turbulence that would cause unacceptable scaling within the inlet plenum chamber. The flue gas velocity in the inlet plenum chamber of the preferred embodiment of the invention should be in the range of roughly 8 to 12 m/s, depending on gas temperature. The outlet plenum chamber receives the cooled flue gas from the outlet ends of the gas cooling tubes, and gradually accelerates the velocity of flow of the flue gas through a convergent outlet portion, prior to discharge of the cooled flue gas to the fluidly connected outlet flue ducting.

Preferably, the inlet and outlet plenum chambers are demountable from the cooling jacket portion of the gas cooler. This demountable feature has the advantage of allowing easy disassembly and cleaning of the inlet and outlet plenum chambers and the entry and exit portions of the cooling tubes, should this become necessary. However, the need for such cleaning is minimised because of the above-mentioned measures taken to avoid turbulence in the flow of the flue gas.

Also according to the subject embodiment, an improved flue gas cooling and cleaning arrangement for an EAF steel making plant includes at least one flue gas cooler in the form of a gas tube heat exchanger comprising a plurality of gas cooling tubes configured to receive and pass flue gas therethrough in a streamlined flow, and a fluidly connected flue gas cleaning system. As such, the flue gas cooler is connected to receive flue gas from an EAF before passing cooled flue gas on to the flue gas cleaning system. The subject flue gas cooler receives flue gases at a temperature in the range of 800 to 1250°C and channels the flue gases having a temperature in the range of 100 to 250°C to the flue gas cleaning system. Such a temperature range, after mixing with secondary gases from the furnace hood suits a flue gas cleaning system equipped with a fabric filter for flue gas particulate removal.

Cooling of the flue gas before it enters the flue gas cleaning system is advantageous in circumstances where the flue gas exiting the EAF is at a temperature that exceeds the temperature capabilities of the flue gas cleaning system. To achieve the required cooling of the flue gas, the subject flue gas cooler utilizes a coolant jacket around gas cooling tubes to form a part of a closed circuit coolant circulation system that links the flue gas cooler to a means of extracting heat energy from the circulating coolant and rejecting the heat to the environment and/or passing the heat to further plant systems for use. Preferably, the closed circuit coolant circulation system circulates the coolant through the coolant jacket in a direction of flow counter to the flow of flue gas through the gas cooling tubes. It is convenient if the coolant in the closed circuit coolant circulation system is water.

In one variation of the invention, particularly (but not only) suitable for hot climates, the closed circuit coolant circulation system is connected to circulate coolant through an absorption chiller station that uses heat recovered from the flue gas to produce chilled water for circulation through a further or second closed circuit coolant circulation system and rejects heat to the environment. Alternatively, the closed circuit coolant circulation system may be connected to circulate coolant through a heat exchanger that rejects heat to the environment and/or to further plant systems for use.

In another aspect, the subject invention provides a method of cooling flue gas from an EAF steel making plant including a flue gas cleaning system, comprising the steps of passing the flue gas at an initial temperature in excess of that compatible with the flue gas cleaning system through a plurality of gas coolers arranged to receive the flue gas in parallel with each other, the gas coolers comprising an array of gas cooling tubes configured to receive and pass flue gas therethrough in streamlined flow, circulating coolant on the outside of the gas cooling tubes to cool the flue gas by indirect transfer of flue gas heat to the coolant, thereby cooling the flue gas to a temperature compatible with the flue gas cleaning system, and passing the cooled flue gas to the flue gas cleaning system.

In yet another aspect, the subject invention provides a system for recovering heat energy from flue gas produced by an EAF steel making plant, comprising at least one flue gas cooler connected to receive flue gas from the EAF and pass cooled flue gas to a flue gas cleaning system, a cooling system that circulates coolant through the at least one flue gas cooler, and a heat energy extraction means connected to extract heat energy from the coolant for further plant use, or for rejection to the environment

The heat energy extraction means may comprise an absorption chiller station that uses coolant heated by the flue gas cooler to produce chilled water for circulation to further plant systems for use, such as one or more of an air cooler battery in an air intake of a gas turbine power plant, an air conditioning system, or a district cooling scheme. Alternatively, the heat energy extraction means may comprise a heat exchanger that uses coolant heated by the flue gas cooler to heat water for circulation to further plant systems for use, such as one or more of a combined cycle power plant, a desalination plant, or a district heating scheme. For example, the further plant system using the extracted heat energy may comprise a pre-heater for boiler water in a combined cycle power plant. Alternatively, the heat energy extraction means may comprise an organic rankine machine also known as "ORC" useful for producing electricity from low temperature sources.

Further aspects of the invention will be apparent from the following description and claims.

### Brief Description of the Drawings

Exemplary embodiments of the subject invention are described below with reference to the accompanying drawings, in which:
Figure 1 is a schematic flow diagram of an EAF steel production plant with a flue gas cooler and associated heat recovery system according to the present invention;
Figure 2 is a schematic side view of a flue gas cooler according to the present invention with an associated heat recovery system; and
Figure 3 is a schematic side cross sectional view of a portion of the flue gas cooler of Figure 2.

### Detailed Description of the Preferred Embodiments

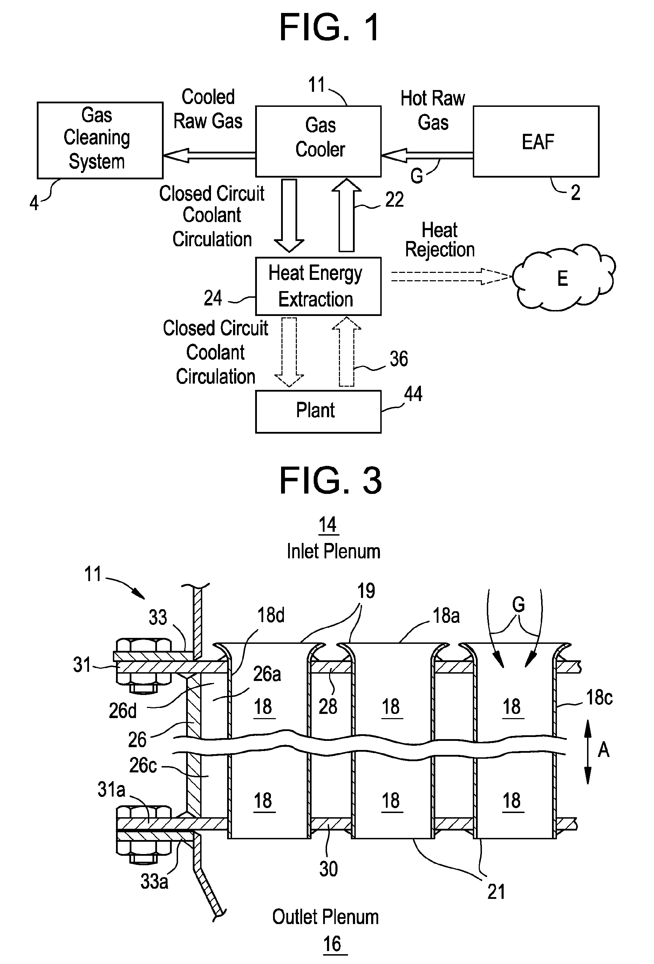

The system illustrated in accompanying Figures 1 to 3 is an exemplary embodiment of the subject invention. Each feature or system parameter illustrated in Figures 1 to 3, or described in detail below, is subject to some degree of variation during detailed system design to fit the needs of a particular iron and steel production plant.

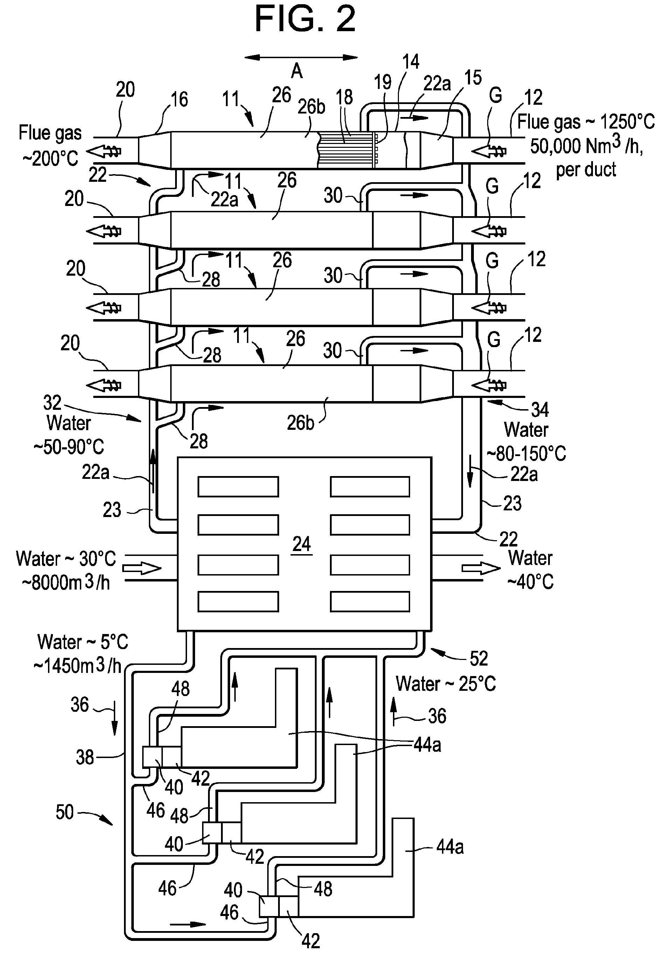

As best illustrated in Figure 2, the present system utilises a cooling principle that has not previously been used to cool hot flue gas from an electric arc furnace (EAF) for iron and steel production, namely a gas cooler 11 comprising a gas tube type of heat exchanger. As such, an EAF (not shown) having a capacity to produce 1,000,000 tons of steel per year produces about 150,000 to 200,000 Nm³/hr of hot, particulate-laden and sublimate-laden flue gas in the process. As such, this volume of hot flue gas amounts to approximately 50,000 Nm³/hr of flue gas per primary duct 12, if using four ducts as illustrated in Figure 2. This hot flue gas generated by the EAF is transported through one or more fluidly connected primary ducts 12 and as illustrated, each primary duct 12 is equipped with its own gas cooler 11.

Each gas cooler 11 has an inlet plenum chamber 14 to slow down and stabilise the hot flue gas received from primary duct 12, and an outlet plenum chamber 16 for discharging the cooled flue gas to ductwork 20. The inlet plenum chambers 14 are each about 1 to 3 meters in diameter and each have a diffusing divergent inlet portion 15, which slows the flue gas, "G", without substantial turbulence. The flue gas flow velocity is slowed by divergent inlet portion 15 to a relatively low velocity of about 8 to 12 meters/second (m/s). The outlet plenum chambers 16 have a convergent contracting profile to increase the flow velocity of the cooled flue gas flowing into ductwork 20.

Cooling of the flue gas is effected by transferring heat from the flue gas to a coolant 22a, such as cooling water, circulated in a closed loop cooling system 22 that is pressurised to about 2 to 10 bar. Pumps (not shown), circulate the coolant 22a through ducts 23 fluidly connected to an absorption chiller station 24 and to an interior 26a of a coolant enclosure or jacket 26 that forms part of an outer shell or casing for each gas cooler 11. The coolant jackets 26 are connected into the cooling system 22 in parallel with each other so that entries 28 and exits 30 are fluidly connected to the "cool" and "hot" legs 32, 34, respectively, of the cooling system 22.

In this embodiment, the gas coolers 11 reduce the flue gas temperature from about 1250 ºC, with peaks as high as 1850 ºC, at inlet plenum chamber 14, to about 200 ºC to 250 ºC at outlet plenum chambers 16, to which cooler secondary gas ventilation from the furnace hood is introduced. After mixing with the cooler secondary air, the flue gas has cooled sufficiently for entry into a gas cleaning system 4 of the fabric filter type previously mentioned. Meanwhile, as the flue gas is cooled in gas cooler 11, the temperature of coolant 22a increases from about 50 ºC to 90 ºC at its exit from the absorption chiller station 24 to about 80 ºC to 150ºC at its exit 30 from cooling jacket 26.

Normally, the gas coolers 11 will be cylindrical, with the coolant jackets 26 being of the same diameter as the inlet and outlet plenum chambers 14 and 16, respectively. Part of the wall 26b of the coolant jacket 26 of the topmost gas cooler 11 in Figure 2 is shown broken away to reveal a bundle of gas cooling tubes 18 occupying the interior 26a of the gas cooler 11 and fluidly connected between the inlet and outlet plenum chambers, 14 and 16, respectively. There will be many more gas cooling tubes 18 within each gas cooler 11 than can be illustrated in Figure 2, e.g., about 500 to 900 tubes depending on coolant jacket 26 diameter. Gas cooling tubes 18 are equally spaced apart over the interior 26a of the coolant jacket 26 and within the inlet and outlet plenum chambers 14 and 16, respectively. As also illustrated in Figure 2, to maximise efficiency of heat transfer from the flue gas G to the coolant 22a, the general direction of flow of coolant 22a through the coolant jackets 26 is counter to the flow of the flue gas G through the gas cooling tubes 18.

For convenience of illustration in Figure 2, the gas coolers 11 are shown with an elongated major axis "A" oriented horizontally. However, in Figure 3, gas cooler 11 is illustrated with an elongated major axis "A" oriented vertically. In operation, a vertical elongated major axis A is the preferred orientation for the gas tube type of heat exchanger. Flue gas enters the gas cooling tubes 18 at their top ends 18a, while coolant 22a enters the coolant jacket 26 at the bottom end 26c, flows upwards past the gas cooling tubes 18 to cool them, and exits the coolant jacket 26 at its top end 26d. Circulation of coolant 22a is aided by the fact that as it heats up by contact with the gas cooling tubes 18, it becomes less dense and naturally rises to the top end 26d of the coolant jacket 26.

Because the gas cooling tubes 18 carry hot raw flue gas direct from the EAF in accordance with the subject invention, the gas cooling tubes 18 must be carefully aerodynamically designed to control dust deposition from the flue gas to a minimal amount in order to maintain effective heat transmission through the walls 18c of gas cooling tubes 18 and into the coolant 22a flowing past them in the coolant jackets 26. Aerodynamic design means ensuring that the flue gas stream velocity vectors are maintained substantially parallel to the walls 18c of the gas cooling tubes 18 during flow therethrough.

As shown more clearly in Figure 3, each gas cooling tube 18 has an inlet end 19 that projects into the inlet plenum chamber 14 and an outlet end 21 that projects into the outlet plenum chamber 16. Each inlet end 19 comprises an aerodynamically shaped bell-mouth converging portion, designed to smoothly accelerate the flow velocity of the flue gas "G" into the gas cooling tubes 18 from the above-mentioned velocity of about 8 to 12 m/s in the inlet plenum chamber 14, to about 20 to 30 m/s in the gas cooling tubes 18. Maintaining streamline flow into the gas cooling tubes 18 while increasing the flow velocity avoids turbulence and prevents dust deposition on the inside walls 18d of the gas cooling tubes 18.

Dimensions of the gas cooling tubes 18 to obtain an optimal flue gas velocity will be a compromise between several variables, such as pressure loss, heat exchange efficiency, fouling factors and the overall size of the gas cooler 11. Optimisation will occur during practical tests. In the present embodiment, each gas cooling tube 18 is about 1 to 3 meters in diameter and about 5 to 8 meters long.

It will be noticed from Figure 3 that the inlet and outlet plenum chambers 14 and 16, respectively, are demountable from the cooling jacket 26 portion of the gas cooler 11. Demounting is facilitated by providing the cooling jacket 26 with end plates 28, 30. End plates 28, 30 not only separate the pressurised coolant jacket 26 from the inlet and outlet plenum chambers 14 and 16, respectively, but also provide bolting flanges 31, 31 a, to interface with similar bolting flanges 33, 33a on the inlet and outlet plenum chambers 14, 16. This construction allows for relatively easy disassembly, maintenance and cleaning of the inlet and outlet plenum chambers 14, 16, and of the inlet ends 19 and outlet ends 21 of the gas cooling tubes 18, should this eventually become necessary.

Note that it is not necessary for there to be a one-to-one relationship between primary ducts 12 and gas coolers 11, as shown in Figure 2. It may in fact be preferable to divide the flue gas flow from primary duct 12 into two or more vertically arranged gas coolers 11. As such, the flow of the coolant 22a through the coolant jackets 26 would be easier to control and the size and complexity of each gas cooler 11 would be more manageable.

The alternative to combining two or more gas coolers 11 with one primary duct 12 is where one or more gas coolers 11 follow each other with regard to the flow of flue gas. This is another possible embodiment of the current invention.

The skilled person will contemplate possible operation of the invention over ranges of metallurgical process parameters. Examples of possible ranges and a preferred reference value for the embodiment described above are provided in the Table below.

**TABLE**

| Parameter | Unit | Range | Reference Value |
|---|---|---|---|
| Flue gas temperature at gas cooler inlet | ºC | 250-1850 | 1250 |
| Flue gas temperature at gas cooler outlet | ºC | 100-300 | 250 |
| Flue gas pressure at cooling tube inlet | Pa | 500-2000 | 1000 |
| Allowable pressure drop across cooling tubes | Pa | 500-1500 | 1100 |
| Flue gas velocity in cooling tubes | m/sec | 15-35 | 20-26 |
| Dust load in flue gas | mg/Nm³ | 100-3000 | 500-1000 |
| Water temperature at inlet of jacket | ºC | 60-120 | 85 |
| Water temperature at outlet of jacket | ºC | 80-150 | 120 |
| Internal pressure | Bar | 0-10 | 2 |

As previously mentioned, EAF steel production plants tend to be built in tropical or sub-tropical areas of the world. In these areas, electric energy for the EAF is produced in gas-fired power stations by power blocks 44a comprising gas turbines driving generators. A typical gas turbine used in such a situation is the ALSTOM® GT13 E2M, of 180 MW gross power output, operating on a simple cycle.

A limiting factor for the efficiency and power output of simple cycle gas turbines is the inlet air temperature to the compressor. In tropical areas, they are designed for a compressor air inlet temperature of 35 ºC. The energy output of a typical simple cycle power block (gas turbine only) can be increased by more than 10% if the compressor inlet air temperature is reduced from 35 ºC to about 15 ºC. The present invention facilitates provision of such inlet air cooling to power blocks 44a, in that heat recovered from gas coolers 11 can be used as the energy source for an absorption type industrial chiller station 24, whose chilled water output can be used to reduce compressor inlet air temperatures. It will be recalled that, for the process parameters previously quoted, each gas cooler 11 can cool 50 to 200,000 Nm³/h of flue gas from a temperature of 1250ºC to a temperature of 250ºC. This means that approximately 45 MW of heat energy is removed from the flue gas by the gas coolers 11 and absorption chiller station 24. As such, this heat energy is used by the chiller station 24 to produce roughly 1450 m³/h of cool water 36 at 5 ºC. The chilled water 36 is circulated through insulated ducts 38 to heat exchangers 40, e.g., batteries of air coolers, located at the intakes 42 of three gas turbine power blocks 44a. The heat exchangers 40 are connected to the chiller station 24 in parallel with each other, with entries 46 and exits 48 fluidly connected to the "cool" and "hot" legs 50, 52, respectively, of the closed circuit water cooling chiller station 24. The above-mentioned GT13 E2M gas turbine power block 44a draws 1.548 x 10⁶ Nm³/h of air through its compressor/turbine system when operating at its normal continuous rating. Standard thermodynamic calculations show that this air flow can be cooled from about 35 ºC to 15 ºC using the above-mentioned amount of chilled water, thereby significantly increasing gas turbine, and therefore power block, efficiency and power output.

As previously mentioned, the heat recovered from the flue gas can be used to increase the power production capability of a simple cycle gas turbine power block by up to 10% or more. This extra power can be used, for example, to increase the production capacity of the EAF steel production plant without the need to invest in a further power plant.

It should be noted that alternatively, or additionally, chilled water produced in the above way could be used for air conditioning and cooling of buildings or districts, purposes which are highly appreciated in tropical and sub-tropical areas.

Whereas the power blocks 44a have been described above as simple cycle for illustrative purposes, they may alternatively comprise combined cycle power plants, in which waste heat from the gas turbine exhaust is used to produce steam to drive a steam turbine coupled to an electrical generator. Due to the greater thermal efficiency of combined cycles relative to a simple cycle, the flue gas heat from the connected iron and steel production plants will - when recovered and utilized in an absorption chiller station as described above - have a cooling capacity that is 50% in excess of the compressor air cooling requirement of the connected combined cycle power blocks. This excess cooling capacity can again be used in further, such as for air conditioning and cooling of buildings or districts.

No matter whether simple cycle or combined cycle power blocks are used, the combination of the gas cooler 11 with an absorption chiller station 24 and gas turbine air inlet coolers 40, is economically beneficial for iron and steel production plants in tropical and sub-tropical areas.

In Figure 1, the chiller station 24 is illustrated using a bank of eight absorption-type industrial chillers, such as York Millennium™ YIA-14F3 single-effect absorption chillers, or equivalents from other manufacturers. Depending on required cooling capacity and the capabilities of the absorption chillers, fewer than eight, or more than eight, chillers could be used. To remove low temperature heat from water or other coolant at 90 ºC to 150 ºC returning from the gas coolers 11, and from the water at 25 ºC returning from the air inlet heat exchangers 40, the chillers use large volumes of water. This is preferably sea water, since many production plants are currently being built near the coast for ease of bulk transport of production supplies. 8000 m3/h of sea water entering the chiller station 24 at 30 ºC will be returned to the sea at 40 ºC, having accomplished the required cooling of the two closed-circuit water cooling systems.

Whereas the use of single-effect absorption chillers has been mentioned in the present invention, the possible use of double- or multiple-effect absorption chillers is not thereby ruled out. However, the latter two types, though more efficient than single-effect absorption chillers, require a higher-grade heat input than single-effect chillers. The grade of heat input available to the absorption chillers depends mainly on the flue gas temperature, because this controls the water inlet temperature to the absorption chillers.

Absorption chillers are used as an means of utilizing the heat energy recovered from the hot flue gases. Alternatively, the invention also contemplates that the heat energy recovered by the gas coolers 11 may be used in a further plant 44, such as one or more of a combined cycle power plant, a desalination plant, or a district heating scheme. Hence, if the absorption chiller station 24 in Figure 1 is simply replaced by a suitable heat exchanger (not shown), the heat energy recovered by the gas coolers 11 can be used to pre-heat boiler water for the steam-raising part of the combined cycle, pre-heat water to be desalinated in the desalination plant, or heat water for circulation around the district heating scheme. The efficiencies of the combined cycle power plant and the desalination plant will of course be increased by the above arrangement.

The present invention has been described above purely by way of example, and modifications can be made within the scope of the invention as claimed. The invention also consists in any individual features described or implicit therein or shown or implicit in the drawings or any combination of any such features or any generalisation of any such features or combination, which extends to equivalents thereof. Thus, the breadth and scope of the present invention should not be limited by any of the above-described exemplary embodiments. Each feature disclosed in the specification, including the claims and drawings, may be replaced by alternative features serving the same, equivalent or similar purposes, unless expressly stated otherwise.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. A gas cooler (11) for cooling flue gas from an electric arc furnace (2) used in a steel production plant, **characterized by:**
a gas inlet chamber (14) fluidly connected to an electric arc furnace (2);
a gas outlet chamber (16); and
a plurality of gas cooling tubes (18), each gas cooling tube (18) having an inlet end (19) in the inlet chamber (14) and an outlet end (21) in the outlet chamber (16), and each gas cooling tube (18) having a bell-shaped inlet end (19) comprising an aerodynamically curved gas-accelerating profile effective to facilitate streamlined flow of flue gas into the gas cooling tube (18).

2. A gas cooler (11) according to claim 1, wherein the inlet and outlet ends (19) (21) of the gas cooling tubes (18) project into the inlet and outlet plenum chambers (14) (16), respectively and the gas cooling tube inlets (19) accelerate the flue gas to a flow velocity in the range of 20 to 30 m/s.

3. A gas cooler (11) according to claim 1, further comprising a coolant enclosure (26) around the gas cooling tubes(18), the enclosure(26) having coolant entry and exit (28) (30) means and forms part of an external shell of the gas cooler (11).

4. A gas cooler (11) according to claim 5, wherein a flow of a coolant (22a) through the coolant enclosure (26) is counter to a direction of gas flow through the gas cooling tubes (18), and the coolant (22a) in the coolant enclosure (26) is water.

5. A gas cooler (11) according to claim 1, wherein the inlet chamber (14) receives hot flue gas via a diffusing inlet (15) for gas flow stabilization before entry into the gas cooling tubes (18), and the diffusing inlet (15) slows the flow velocity of hot flue gas in the inlet chamber (14) to a relatively low velocity in the range of 8 to 12 m/s.

6. A gas cooler (11) according to claim 1, wherein the inlet and outlet chambers (14) (16) are demountable from a coolant enclosure (26).

7. An improved flue gas cooling and cleaning arrangement for an iron and steel production plant, including at least one flue gas cooler (11) in the form of a gas tube heat exchanger **characterized by:**
a plurality of gas cooling tubes (18) configured to receive and pass flue gas therethrough in a streamlined flow from an electric arc furnace (2), and a flue gas cleaning system (4) fluidly connected to receive cooled flue gas from the at least one flue gas cooler (11).

8. The arrangement of claim 7, wherein the flue gas cleaning system (4) is of the fabric filter type.

9. The arrangement of claim 7, wherein a coolant jacket (26) around the gas cooling tubes (18) of the flue gas cooler (11) is part of a closed circuit coolant circulation system (22) comprising a flow of coolant (22a) through the coolant jacket (26) in a direction counter to a flow of flue gas through the gas cooling tubes (18).

10. The arrangement of claim 7, wherein a plurality of flue gas coolers (11) are connected in parallel with each other to receive flue gas from an electric arc furnace (2) and each flue gas cooler (11) has a coolant jacket (26) connected to a common closed circuit coolant circulation system (22) in parallel with other coolant jackets (26).

11. The arrangement of claim 10, wherein a coolant (22a) in the closed circuit coolant circulation system (22) is water and the closed circuit coolant circulation system (22) is connected to circulate coolant (22a) through an absorption chiller station (24) that uses heat recovered from the flue gas to produce chilled water for circulation through a further closed circuit coolant circulation system (22).

12. The arrangement of claim 10, wherein the closed circuit coolant circulation system (22) is connected to circulate coolant (22a) through a heat exchanger (11) that rejects heat to the environment or passes it to a further plant (44).

13. A method of cooling flue gas from an EAF (2) steel making plant including a flue gas cleaning system (4), comprising the steps of:
passing the flue gas at an initial temperature in excess of that compatible with the flue gas cleaning system (4) through a plurality of gas coolers (11) arranged to receive the flue gas in parallel with each other from an electric arc furnace (2), the gas coolers (11) comprising an array of gas cooling tubes (18) configured to receive and pass flue gas therethrough in a streamlined flow;
circulating coolant (22a) on the outside of the gas cooling tubes (18) to cool the flue gas by transfer of flue gas heat to the coolant (22a), thereby cooling the flue gas to a temperature compatible with the flue gas cleaning system (4); and
passing the cooled flue gas to the flue gas cleaning system (4).

14. A system for recovering heat energy from flue gas produced by an iron and steel production plant (44), **characterized by**:
at least one flue gas cooler (11) connected to receive flue gas from an electric arc furnace (2) of a steel making plant (44) and pass cooled flue gas to a flue gas cleaning system (4);
a cooling system (22) that circulates coolant (22a) through the at least one flue gas cooler (11); and
a heat energy extraction means (24) connected to extract heat energy from the coolant (22a) and reject it to the environment or pass it to a further plant (44).

15. A system according to claim 14, in which the heat energy extraction means (24) comprises an absorption chiller station (22) that uses coolant (22a) heated by the flue gas cooler (11) to produce chilled water for circulation to a further plant (44) comprising at least one of the following:
a heat exchanger arrangement (24) in an air intake of a gas turbine power plant (44);
an air conditioning system;
a district cooling scheme.

16. A system according to claim 14, in which the heat energy extraction means comprises a heat exchanger (24) that uses coolant (22a) heated by the flue gas cooler (11) to heat water for circulation to a further plant (44) comprising at least one of the following:
a pre-heater for boiler water in a combined cycle power plant,
a desalination plant,
a district heating scheme.
